Europäisches Patentamt

European Patent Office

Office européen des brevets

(11) Numéro de publication: **0 413 385 A1**

# DEMANDE DE BREVET EUROPEEN

(21) Numéro de dépôt: **90202143.5**

(22) Date de dépôt: **06.08.90**

(51) Int. Cl.⁵: **C01D 1/04, C01D 1/22, C25B 1/42**

(30) Priorité: **17.08.89 BE 8900880**

(43) Date de publication de la demande:
**20.02.91 Bulletin 91/08**

(84) Etats contractants désignés:
**AT CH DE DK ES FR GB IT LI NL SE**

(71) Demandeur: **SOLVAY & Cie (Société Anonyme)
Rue du Prince Albert, 33
B-1050 Bruxelles(BE)**

(72) Inventeur: **Verlaeten, Jean
Avenue Circulaire 144A (Bte 10)
B-1180 Bruxelles(BE)**

(74) Mandataire: **Anthoine, Paul et al
SOLVAY & Cie Département de la Propriété
Industrielle 310, rue de Ransbeek
B-1120 Bruxelles(BE)**

(54) **Procédé de fabrication d'une lessive d'hydroxyde de sodium.**

(57) Procédé de fabrication d'une lessive d'hydroxyde de sodium, selon lequel on décompose un amalgame de sodium (22) avec un milieu aqueux contenant de l'hydroxyde de sodium dissous (20), provenant du traitement d'une solution aqueuse de carbonate de sodium (2) avec de la chaux (3).

## PROCÉDÉ DE FABRICATION D'UNE LESSIVE D'HYDROXYDE DE SODIUM

L'invention a pour objet un procédé pour la fabrication de lessives aqueuses d'hydroxyde de sodium.

On connait un procédé pour fabriquer des lessives aqueuses d'hydroxyde de sodium, dans lequel on électrolyse une solution aqueuse de chlorure de sodium dans une cellule d'électrolyse à cathode de mercure, on soutire de la cellule un amalgame de sodium et on traite l'amalgame de sodium avec de l'eau, au contact d'éléments en graphite ou en carbone, pour le décomposer (J. S. SCONCE, "Chlorine, its manufacture, properties and uses" Reinhold Publishing Corporation, 1962, pages 127 à 199). Dans ce procédé connu, l'électrolyse de la solution aqueuse de chlorure de sodium génère du chlore et la décomposition subséquente de l'amalgame par l'eau génère de l'hydrogène et produit une solution aqueuse d'hydroxyde de sodium, généralement appelée lessive aqueuse d'hydroxyde de sodium. La production d'hydroxyde de sodium implique dès lors inévitablement la production concomitante de chlore, à raison de 886 g de chlore par kg d'hydroxyde de sodium. Cette relation rigide entre les productions respectives de chlore et d'hydroxyde de sodium constitue un inconvénient majeur du procédé qui, de ce fait, ne présente pas la souplesse nécessaire pour adapter sa production aux fluctuations des marchés respectifs du chlore et de l'hydroxyde de sodium.

On connaît par ailleurs un procédé dans lequel on associe un procédé d'électrolyse en cellule à mercure avec un procédé d'électrolyse d'une solution de chlorure de sodium dans une cellule d'électrolyse à membrane perméable sélectivement aux cations; dans ce procédé connu, la décomposition de l'amalgame de sodium provenant de la cellule à mercure est réalisée au moyen d'une solution aqueuse diluée d'hydroxyde de sodium produite dans la cellule à membrane (US-A-3321388). Ce procédé connu améliore certes le rendement global des deux cellules d'électrolyse, mais il n'évite pas l'inconvénient précité en relation avec l'impossibilité de dissocier la production d'hydroxyde de sodium de la production concomitante de chlore.

L'invention vise à fournir un procédé qui évite cet inconvénient des procédés connus, en permettant de réguler la production électrolytique d'hydroxyde de sodium indépendamment de celle du chlore.

L'invention concerne dès lors un procédé de fabrication d'une lessive d'hydroxyde de sodium, selon lequel on décompose un amalgame de sodium avec un milieu aqueux contenant de l'hydroxyde de sodium dissous; selon l'invention, on met en oeuvre de l'hydroxyde de sodium provenant du traitement d'une solution aqueuse de carbonate de sodium avec de la chaux.

Dans le procédé selon l'invention, on entend désigner par lessive d'hydroxyde de sodium, une solution aqueuse d'hydroxyde de sodium provenant de la décomposition de l'amalgame de sodium par de l'eau.

L'amalgame de sodium est un alliage de mercure et de sodium, généralement obtenu en électrolysant une solution aqueuse de chlorure de sodium dans une cellule d'électrolyse à cathode de mercure. En principe, la teneur en sodium de l'amalgame n'est pas critique pour l'exécution du procédé selon l'invention. En pratique toutefois, le bon fonctionnement des cellules à mercure implique de limiter la teneur en sodium dans l'amalgame au-dessous de 7 g/kg. Les concentrations préférées sont celles comprises entre 1 et 5 g par kg d'amalgame.

Conformément à l'invention, la décomposition de l'amalgame est réalisée au moyen d'un milieu aqueux contenant de l'hydroxyde de sodium obtenu en traitant une solution aqueuse de carbonate de sodium avec de la chaux. Le milieu aqueux est généralement de l'eau. La production d'hydroxyde de sodium par réaction d'une solution aqueuse de carbonate de sodium avec de la chaux est une technique bien connue (K. WINNAKER et L. KÜCHLER "Technologie minérale" traduit par A. ZUNDEL, Editions Eyrolles, 1962, pages 382 à 388). Cette technique de caustification du carbonate de sodium conduit à l'obtention d'une solution aqueuse d'hydroxyde de sodium que l'on utilise pour traiter l'amalgame.

Dans le procédé selon l'invention, il est avantageux d'utiliser une solution la plus concentrée possible en carbonate de sodium; les solutions saturées sont préférées. La solution de carbonate de sodium peut être obtenue par tous moyens adéquats. On utilise généralement une solution obtenue par débicarbonatation d'une solution ou d'une suspension aqueuse de bicarbonate de sodium telle que celles que l'on obtient dans le procédé de fabrication de la soude à l'ammoniaque (TE PANG HOU, "Manufacture of soda", Hafner Publishing Company, 1969). La débicarbonatation des solutions ou suspensions aqueuses de bicarbonate de sodium est une opération bien connue en technique, consistant généralement en un chauffage de celles-ci, par exemple au moyen d'un courant de vapeur d'eau.

Dans le cadre de l'invention, la chaux est de l'oxyde de calcium ou de l'hydroxyde de calcium. On préfère utiliser une suspension aqueuse d'hydroxyde de calcium.

Dans une forme de réalisation particulière du procédé selon l'invention, on traite la solution aqueuse de carbonate de sodium avec la chaux, on recueille du milieu réactionnel une solution aqueuse diluée d'hydroxyde de sodium, on soumet ladite solution diluée à une évaporation dans des conditions réglées pour former une solution concentrée contenant, par kg, plus de 186 g d'hydroxyde de sodium, on refroidit ladite solution concentrée pour cristalliser de l'hydroxyde de sodium hydraté dans une eau mère, on recueille l'hydroxyde de sodium hydraté, on le chauffe à une température suffisante pour le fondre et on traite l'amalgame de sodium avec l'hydroxyde de sodium hydraté fondu. Dans cette forme de réalisation du procédé selon l'invention, l'hydroxyde de sodium hydraté fondu constitue le milieu aqueux précité, utilisé pour décomposer l'amalgame de sodium.

Dans la forme de réalisation qui vient d'être exposée du procédé selon l'invention, la solution aqueuse diluée d'hydroxyde de sodium que l'on recueille de la réaction du carbonate de sodium avec la chaux contient par exemple, en général, entre 5 et 25% en poids d'hydroxyde de sodium, plus généralement entre 8 et 15%. Elle est généralement contaminée par des matières en solution, provenant des réactifs utilisés dans la réaction de caustification (carbonate de sodium et chaux), notamment du carbonate de sodium, du chlorure de sodium et du sulfate de sodium. Conformément à l'invention, on la concentre en la soumettant à une évaporation réglée pour amener sa teneur en hydroxyde de sodium dissous au-dessus de 186,0 g/kg et de préférence au-dessous de 743 g/kg, qui sont les teneurs correspondant respectivement au mélange eutectique de la glace et de l'hydroxyde de sodium heptahydraté, d'une part, et au mélange eutectique des composés $NaOH$ et $NaOH.1H_2O$, d'autre part. La solution concentrée recueillie de l'évaporation est ensuite refroidie pour cristalliser de l'hydroxyde de sodium hydraté dans une eau mère. La température du refroidissement dépend de la concentration de la solution concentrée d'hydroxyde de sodium recueillie de l'évaporation, et elle peut aisément être déterminée au moyen du diagramme des phases du système $NaOH - H_2O$ (P. PASCAL, "Nouveau traité de chimie minérale", Tome II, Premier fascicule, Masson et Cie, éditeurs, 1966, pages 254 à 258). Dans cette forme de réalisation du procédé selon l'invention, on peut mettre en oeuvre la technique décrite dans le document US-A-1733879. Pour recueillir l'hydroxyde de sodium hydraté, on peut faire usage de tout moyen capable de le séparer de l'eau mère, par exemple une filtration, une décantation ou une centrifugation.

Cette forme de réalisation du procédé selon l'invention présente l'avantage d'éviter la présence d'impuretés dans le milieu aqueux susmentionné, utilisé pour décomposer l'amalgame de sodium.

Dans une variante avantageuse de la forme de réalisation décrite plus haut du procédé selon l'invention, l'évaporation de la solution diluée est réglée de manière que la solution aqueuse concentrée contienne, par kg, entre environ 468 et 321 g d'hydroxyde de sodium, qui sont les teneurs correspondant respectivement au mélange eutectique des composés $NaOH.3,5H_2O$ et $NaOH.2H_2O$, d'une part, et à la solution aqueuse saturée en hydroxyde de sodium à la température de cet eutectique, d'autre part. Dans l'exécution de cette variante de réalisation du procédé selon l'invention, il est souhaitable que la solution aqueuse concentrée recueillie de l'évaporation présente une concentration en hydroxyde de sodium notablement différente de 388,3 g/kg, (correspondant au composé défini $NaOH.3,5H_2O$), de manière à faciliter le passage des impuretés dans l'eau mère au cours de la cristallisation par refroidissement. Pour des considérations de nature économique, il est préférable que la solution concentrée recueillie de l'évaporation ait une concentration en hydroxyde de sodium inférieure à 388,3 g/kg.

Dans la variante qui vient d'être décrite du procédé selon l'invention, le refroidissement de la solution concentrée est opéré à une température comprise entre, d'une part, la température de solidification du mélange eutectique des composés $NaOH.3,5H_2O$ et $NaOH.2H_2O$ (environ 5°C) et, d'autre part, la température de fusion du composé défini $NaOH.3,5H_2O$ (environ 16°C).

Le procédé selon l'invention permet une flexibilité dans le fonctionnement des cellules d'électrolyse à mercure, en permettant d'adapter la fonctionnement des cellules au marché de l'hydroxyde de sodium, sans influencer la production du chlore.

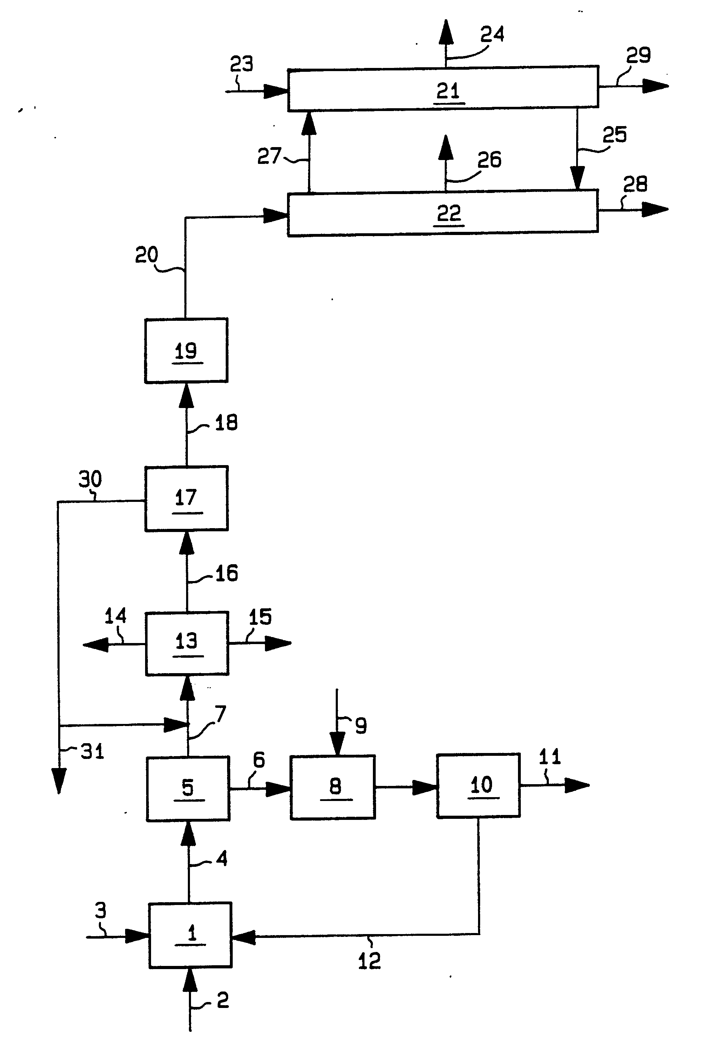

Des particularités et détails de l'invention vont ressortir de la description suivante de la figure unique du dessin annexé, qui représente le schéma d'une installation mettant en oeuvre une forme de réalisation particulière du procédé selon l'invention.

L'installation représentée à la figure comprend une unité de caustification de carbonate de sodium et une unité d'électrolyse.

Dans l'unité de caustification, on introduit une solution aqueuse de carbonate de sodium 2 et de la chaux vive 3 dans une chambre de réaction 1. On recueille de la chambre de réaction 1 une suspension aqueuse 4 comprenant principalement du carbonate de calcium en suspension dans une solution aqueuse d'hydroxyde de sodium. La suspension 4 est traitée dans une chambre de décantation 5, de laquelle on recueille séparément un précipité de carbonate de calcium 6 et une solution aqueuse diluée d'hydroxyde de sodium 7. Le précipité 6 contient généralement une quantité non négligeable d'hydroxyde de calcium. On l'envoie dans une seconde chambre de réaction 8 qui est par ailleurs alimentée avec une solution aqueuse de carbonate de sodium 9. Après traitement sur un filtre 10 pour en séparer les matières insolubles 11, la solution aqueuse 12 est recyclée dans la chambre de réaction 1. La solution 7 recueillie de la chambre de décantation 5 contient par exemple entre 8 et 15% en poids d'hydroxyde de sodium. Elle est par ailleurs contaminée par diverses impuretés dissoutes, notamment du sulfate de sodium, du carbonate de sodium et du chlorure de sodium. Elle est envoyée dans un évaporateur 13 où on la concentre jusqu'à une teneur en hydroxyde de sodium comprise entre 321 et 388,3 g/kg. L'évaporation a pour résultat d'éliminer de l'eau 14 et de précipiter une partie des impuretés, principalement du sulfate de sodium et du carbonate de sodium que l'on évacue en 15. La solution aqueuse concentrée 16 que l'on recueille de l'évaporateur 13 est ensuite traitée dans un réfrigérant 17, où on la refroidit à une température comprise entre 5 et 16°C, de manière à cristalliser le composé NaOH.3,5H$_2$O dans une eau mère. On recueille séparément le composé cristallisé 18 et l'eau mère 30. Le composé cristallisé 18 est essentiellement constitué d'hydroxyde de sodium hydraté de formule NaOH.3,5H$_2$O. On l'envoie dans une chambre de stockage 19, où on le réchauffe à une température supérieure à sa température de fusion (15,9°C), par exemple à la température ambiante, de manière à obtenir une solution aqueuse 20 contenant environ 388,3 g d'hydroxyde de sodium par kg. L'eau mère 30 est une solution aqueuse d'hydroxyde de sodium. Elle est recyclée dans l'évaporateur 13, après en avoir soutiré une purge 31.

L'unité d'électrolyse comprend une cellule d'électrolyse 21 du type à cathode de mercure, associée à un décomposeur d'amalgame de sodium 22. Des unités d'électrolyse de ce type sont bien connues en technique (J. S. SCONCE, "Chlorine, its manufacture, properties and uses" Reinhold Publishing Corporation, 1962, pages 127 à 199). La cellule d'électrolyse 21 comprend, de manière connue, une cathode horizontale de mercure (non représentée à la figure), en écoulement sur la sole de la cellule et des anodes (non représentées) disposées en regard du film de mercure, à courte distance de celui-ci. On fait circuler une solution aqueuse de chlorure de sodium 23 dans la cellule, au contact du film de mercure et des anodes. La solution aqueuse est décomposée par l'électrolyse et on recueille du chlore 24, un amalgame de sodium 25 et une solution aqueuse appauvrie en chlorure de sodium 29. L'amalgame de sodium contient par exemple entre 2,5 et 4 g de sodium par kg. Il est envoyé dans le décomposeur 22 où on le fait circuler à contre-courant de la solution aqueuse d'hydroxyde de sodium 20 fabriquée dans l'unité de caustification. Dans le décomposeur 22 l'amalgame de sodium 25 et la solution aqueuse 20 sont mis en contact avec des éléments en graphite (non représentés au dessin). L'amalgame de sodium est décomposé progressivement par réaction avec l'eau, conduisant à la génération d'hydrogène 26. On recueille du mercure (ou un amalgame appauvri en sodium) 27 que l'on recycle dans la cellule d'électrolyse 21 et une lessive aqueuse d'hydroxyde de sodium 28.

## Revendications

1 - Procédé de fabrication d'une lessive d'hydroxyde de sodium, selon lequel on décompose un amalgame de sodium avec un milieu aqueux contenant de l'hydroxyde de sodium dissous, caractérisé en ce qu'on met en oeuvre de l'hydroxyde de sodium provenant du traitement d'une solution aqueuse de carbonate de sodium avec de la chaux.

2 - Procédé selon la revendication 1, caractérisé en ce qu'à l'issue du traitement de la solution de carbonate de sodium avec la chaux, on recueille une solution diluée d'hydroxyde de sodium, on soumet ladite solution diluée à une évaporation dans des conditions réglées pour former une solution concentrée contenant, par kg, entre 188,0 et 468 g d'hydroxyde de sodium, on refroidit ladite solution concentrée pour cristalliser de l'hydroxyde de sodium hydraté que l'on recueille et que l'on chauffe à une température suffisante pour le fondre, et on traite l'amalgame de sodium avec l'hydroxyde de sodium hydraté fondu.

3 - Procédé selon la revendication 2, caractérisé en ce qu'on règle l'évaporation pour que la solution concentrée contienne, par kg, entre 321 et 468 g d'hydroxyde de sodium, et on refroidit la solution concentrée à une température comprise entre 5 et 16°C.

4 - Procédé selon la revendication 3, caractérisé en ce qu'on règle l'évaporation pour que la solution concentrée présente une teneur pondérale en hydroxyde de sodium inférieure à 388,3 g/kg.

5. Procédé selon l'une quelconque des revendications 1 à 4, caractérisé en ce qu'on met en oeuvre une solution aqueuse de carbonate de sodium obtenue par débicarbonatation d'une solution saturée de bicarbonate de sodium.

6 - Procédé selon l'une quelconque des revendications 1 à 5, caractérisé en ce qu'on met en oeuvre un amalgame de sodium contenant entre 1 et 5 g de sodium par kg.

7 - Procédé selon la revendication 6, caractérisé en ce qu'on met en oeuvre un amalgame de sodium obtenu par électrolyse d'une solution aqueuse de chlorure de sodium dans une cellule d'électrolyse à cathode de mercure.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | US-A-3321388 (TADAO UEDA ET AL.)<br>* revendication 1 *<br>--- | 1 | C01D1/04<br>C01D1/22<br>C25B1/42 |
| Y | CH-A-264595 (SOLVAY & CIE.)<br>* page 1, lignes 1 - 5 *<br>--- | 1 | |
| Y | EP-A-35128 (UHDE GMBH.)<br>* revendication 1 *<br>----- | 1 | |

|  | DOMAINES TECHNIQUES RECHERCHES (Int. Cl.5) |
|---|---|
|  | C01D<br>C25B |

Le présent rapport a été établi pour toutes les revendications

| Lieu de la recherche | Date d'achèvement de la recherche | Examinateur |
|---|---|---|
| LA HAYE | 23 OCTOBRE 1990 | VAN BELLINGEN I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................
& : membre de la même famille, document correspondant

EPO FORM 1503 03.82 (P0402)